# NEUE EUROPÄISCHE PATENTSCHRIFT

(11) **EP 1 769 905 B2**
(45) Veröffentlichungstag und Bekanntmachung des Hinweises auf die Entscheidung über den Einspruch: **21.11.2012**
(45) Hinweis auf die Patenterteilung: 20.05.2009
(21) Anmeldenummer: 06120241.2
(22) Anmeldetag: 07.09.2006
(51) Int. Cl.: B29D 30/30, B29D 30/44, B29C 43/24

(54) **Verfahren zum Aufspulen von Gummistreifen aus einer Rohgummimischung auf einen Reifenrohling**
Method of winding strips of unvulcanized rubber on a green tyre
Procédé pour enrouler des bandelettes en caoutchouc non vulcanisé sur un pneumatique cru

(30) Priorität: 28.09.2005 DE 102005046222
(43) Veröffentlichungstag der Anmeldung: 04.04.2007
(73) Patentinhaber: Continental Aktiengesellschaft, 30165 Hannover (DE)
(72) Erfinder: Geffert, Ulrich, 31848 Bad Münder (DE); Ramcke, Uwe, 29664 Walsrode (DE)

(56) Entgegenhaltungen:
- EP-A2- 0 268 544
- EP-A2- 0 335 152
- EP-A2- 0 968 814
- EP-A2- 1 033 218
- EP-A2- 1 216 852
- WO-A-2007/000443
- DE-B1- 2 523 088
- US-A- 4 311 658
- US-A1- 2004 079 470
- US-A1- 2005 189 061

## Beschreibung

Die Erfindung betrifft ein Verfahren zum Aufspulen von Gummistreifen aus einer Rohgummimischung auf einen Reifenrohling.

Bei einer Art der Herstellung von Fahrzeugreifen wird dieser so hergestellt, dass insbesondere der Laufstreifen in Form von schmalen Gummistreifen auf den Reifenrohling, der sich auf einer Reifenaufbautrommel befindet, aufgespult wird.
Die Gummistreifen, die aus einer Rohgummimischung bestehen, werden direkt vor dem Aufspulprozess mit einem Extruder erzeugt.
Dabei besteht ein Problem darin, dass hochviskose Gummimischungen sich mit zunehmenden Schergefälle erwärmen, wie sie z.B. in einem Extruder bzw. in einem Extrudermundstück auftreten. Um ein Anvulkanisieren der Mischung im Extruder zu verhindern muß der Aufspulprozess daher relativ langsam erfolgen. Eine weitere Möglichkeit zur Reduktion der Schergeschwindigkeiten ist die Wahl eines größeren Extrudermundstückes und somit eines größeren Streifenquerschnittes. Für das Aufspulen von Rohgummimischungen auf eine Reifenkarkasse wird jedoch ein möglichst kleiner Gummistreifen benötigt, um die Bauteilkontur, z.B. des Laufstreifens, genau nachzubilden. Die Vergrößerung des Gummistreifen-Querschnittes würde somit die Konturgenauigkeit reduzieren, d.h. die Genauigkeit der Materialverteilung auf der Reifenkarkasse.
Die EP1216852A, W02007/000443A, EP268544A und US4311658A offenbaren unterschiedliche Verfahren zum Aufspulen von Gummistreifen.

Der Erfindung lag die Aufgabe zugrunde, ein Verfahren bereitzustellen, mit dem der Gummistreifen in einem optimierten Aufspulprozess auf den Reifenrohling aufgespult wird.

Gelöst wird die Aufgabe durch ein Verfahren gemäß dem Anspruch 1 zum Aufspulen von Gummistreifen aus einer Rohgummimischung auf einen Reifenrohling mit folgenden Schritten:
- Erzeugen eines Gummistreifens mit einem Extruder mit einem Extrudermundstück,
- Weiterleitung des Gummistreifens zu einem ersten Kalander-Rollenpaar,
- Reduzierung des Gummistreifen-Querschnittes in einem mehrstufigen Streckprozess,
- wobei der Streckprozess mindestens zwei hintereinander angeordnete Kalander-Rollenpaare (3) umfasst,
- wobei die Rollenabstände der einzelnen Kalander-Rollenpaare (3), im Vergleich zum jeweils vorhergehenden Kalander-Rollenpaar, kleiner werden,
- Weiterleitung des Gummistreifens an eine Streifenbelegerrolle,
- Aufspulen des Gummistreifens auf einen auf einer Reifenaufbautrommel aufgespannten Reifenrohling.

Vorteilhafte Ausgestaltungen der Erfindung sind Gegenstand der abhängigen Ansprüche.

Ein Vorteil der Erfindung ist insbesondere darin zu sehen, dass durch das erfindungsgemäße Verfahren ein optimierter Aufspulprozess erreicht wird. Durch die Reduzierung des Gummistreifenquerschnittes in einem ein- oder mehrstufigen Streckprozess, nachdem der Gummistreifen durch den Extruder erzeugt wurde, lässt sich ein Aufspulprozess mit einer hohen Spulgeschwindigkeit realisieren. Durch das erfindungsgemäße Verfahren besitzen die Gummistreifen vor dem Aufspulen auf den Reifenrohling ebenfalls einen relativ kleinen Streifenquerschnitt, wodurch die erforderliche Bauteilkontur des Fahrzeugreifens sehr gut nachgebildet werden kann. Durch den ein- oder mehrstufigen Streckprozess besitzt der Gummistreifen vor dem Auflegen auf den Reifenrohling außerdem eine hohe Spulgeschwindigkeit. Dahingegen ist die Geschwindigkeit des Rohgummimaterials im Extrudermundstück des Extruders relativ gering, wodurch die Gefahr des Anvulkanisierens im Extruder verhindert wird.

Es ist vorgesehen, dass der Streckprozeß mindestens zwei hintereinander angeordnete Kalander-Rollenpaare umfasst. Durch die Vielzahl von mehreren hintereinander angeordneten Kalander-Rollenpaaren wird der Querschnitt des Gummistreifens sukzessive reduziert, wodurch das auftretende Scherrgefälle in den einzelnen Kalander-Rollenpaaren begrenzt wird.

Es ist auch vorgesehen, dass die Rollenabstände der einzelnen Kalander-Rollenpaare, im Vergleich zum jeweils vorhergehenden Kalander-Rollenpaar, kleiner werden. Durch das Verkleinern der einzelnen Rollenabstände erfolgt die Querschnittsreduzierung des Gummistreifens kontinuierlich.

In einer weiteren vorteilhaften Weiterbildung der Erfindung ist vorgesehen, dass die Drehgeschwindigkeiten der einzelnen Kalander-Rollenpaare, im Vergleich zum jeweils vorhergehenden Kalander-Rollenpaar, größer werden, wodurch der Gummistreifen in seiner Längserstreckung unter Spannung steht und gestreckt wird. Durch die Erhöhung der Drehgeschwindigkeiten wird der Gummistreifen zum einen gestreckt und zum anderen die Aufspulgeschwindigkeit erhöht.

In einer weiteren vorteilhaften Weiterbildung der Erfindung ist vorgesehen, dass die Drehgeschwindigkeiten der Streifenbelegerrolle größer sind als die Drehgeschwindigkeit des vorhergehenden Kalander-Rollenpaares. Durch die höhere Geschwindigkeit der Streifenbelegerrolle wird ebenfalls das Endstück des Gummistreifens vor dem Aufspulen auf die Reifenaufbautrommel unter Spannung gehalten.

In einer weiteren vorteilhaften Weiterbildung der Erfindung ist vorgesehen, dass nur eine der beiden Rollen eines Kalander-Rollenpaares über einen separaten Antrieb mit einer separaten Steuerung angetrieben wird. Durch die separaten Antriebe und Steuerungen können die einzelnen Kalander-Rollenpaare mit unterschiedlichen Drehgeschwindigkeiten betrieben werden, die für einen optimalen Aufspulprozess notwendig sind.

In einer weiteren vorteilhaften Weiterbildung der Erfindung ist vorgesehen, dass der Gummistreifen beim Durchlaufen des ersten Kalander-Rollenpaares einen im Wesentlichen kreisrunden Querschnitt aufweist. Auf diese Weise kann das erste Kalander-Rollenpaar beweglich zum Extruder bzw. zum Extrudermundstück angeordnet sein.

Es ist vorgesehen, dass der Gummistreifen beim Durchlaufen des letzten Kalander-Rollenpaares einen im Wesentlichen linsenförmigen Querschnitt erhält. Vor dem Aufspulen des Gummistreifens auf den Reifenrohling sollte der Gummistreifen diesen linsenförmigen Querschnitt besitzen, damit der Gummistreifen einfach auf den Reifenrohling aufgespult werden kann.

In einer weiteren vorteilhaften Weiterbildung der Erfindung ist vorgesehen, dass der Gummistreifen aus einer hochviskosen Gummimischung besteht. Bei hochviskosen Rohgummimischungen ist das Verfahren besonders vorteilhaft einsetzbar, da bei diesen Gummimischungen das Problem des Anvulkanisierens im Extruder im Speziellen auftritt.

Es ist vorgesehen, dass der Reifenrohling eine Reifenkarkasse ist und der aufgespulte Gummistreifen den Laufstreifen des Fahrzeugreifens bildet. Beim Aufspulen des Laufstreifens ist es besonders wichtig, einen möglichst schmalen Gummistreifen einzusetzen, um anschließend die Bauteilkontur des Laufstreifens möglichst genau nachbilden zu können.

Anhand eines Ausführungsbeispiels soll die Erfindung näher erläutert werden. Es zeigen:
- Fig. 1: ein Ausführungsbeispiel des erfindungsgemäßen Verfahrens mit einem Extruder, drei Kalander-Rollenpaaren und einer Reifenaufbautrommel und
- Fig. 2: eine Ausschnittvergrößerung der Kalander-Rollenpaare in Figur 1.

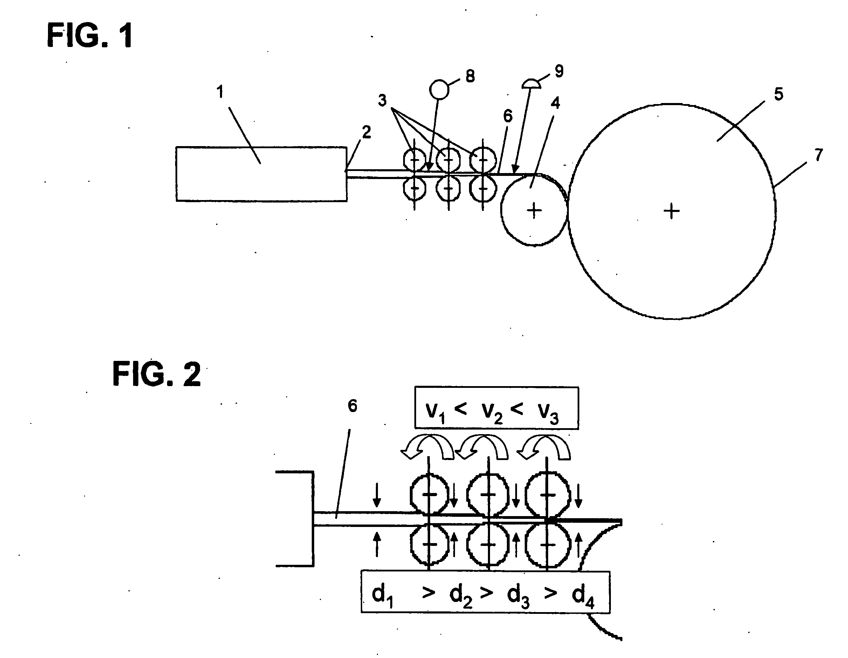

Die Figur 1 zeigt ein Ausführungsbeispiel des erfindungsgemäßen Verfahrens.
Die Vorrichtung besteht im Wesentlichen aus einem Extruder 1 mit einem Extrudermundstück 2, zwei oder mehreren Kalander-Rollenpaaren 3 mit jeweils einem separaten und steuerbaren Antrieb, einer Streifenbelegerrolle 4 und einer angetriebenen und steuerbaren Reifenaufbautrommel 5 mit einem aufgespannten Reifenrohling 7. Der Gummistreifen 6 kommt aus dem Extrudermundstück 2 des Extruders 1 und wird sodann an das erste Kalander-Rollenpaar weitergeleitet.

Um die Temperaturen im Extruder niedrig zu halten wird ein relativ großes Extrudermundstück 2 gewählt. In dem nachfolgenden mehrstufigen Zieh- und Streckprozess wird der Querschnitt d des Gummistreifens 6 sukzessive reduziert und dabei die Geschwindigkeit des Gummistreifens 6 entsprechend erhöht. In der Figur 1 ist oberhalb der Kalander-Rollenpaare die jeweilige Querschnittskontur des Gummistreifens 6 dargestellt. Nach dem Durchlaufen des ersten Kalander-Rollenpaares besitzt der Gummistreifen 6 zunächst eine im Wesentlichen kreisförmige Querschnittskontur 8. Nach dem Durchlaufen des letzten Kalander-Rollenpaares erhält der Gummistreifen 6 die linsenförmige Querschnittskontur 9. Mit dieser Querschnittskontur wird der Gummistreifen auf den Reifenrohling 7 aufgespult.

Die Figur 2 zeigt eine Ausschnittsvergrößerung der Kalander-Rollenpaare in Figur 1. Das Ziehen bzw. Strecken des Gummistreifen 6 erfolgt durch zwei oder mehrere Kalander-Rollenpaare, die so synchronisiert sind, das das jeweils folgende Kalander-Rollenpaar mit einer höheren Geschwindigkeit v läuft als das vorhergehende Kalander-Rollenpaar.
Durch die Geschwindigkeitsdifferenzen wird der Gummistreifen gestreckt und der Querschnitt d₁ - d₄ des Gummistreifens 6 entsprechend reduziert. Die Querschnittsreduzierung des Gummistreifens 6 wird dadurch unterstützt, dass die Rollenabstände der einzelnen Kalander-Rollenpaare im Vergleich zum jeweils vorhergehenden Kalanderrollenpaar kleiner werden. Das Verfahren ist besonders vorteilhaft bei der Verwendung von hochviskosen Rohgummimischungen einsetzbar, da bei diesen Gummimischungen die Problematik des Anvulkanisierens im Extruder besonders häufig auftritt.

### Bezugszeichenliste

### (ist Teil der Beschreibung)

- 1: Extruder
- 2: Extrudermundstück
- 3: Kalander-Rollenpaar
- 4: Streifenbelegerrolle
- 5: Reifenaufbautrommel
- 6: Gummistreifen
- 7: Reifenrohling
- 8: Kreisförmige Querschnittskontur des Gummistreifens
- 9: Linsenförmige Querschnittskontur des Gummistreifens

- d, d₁ bis d₄: Querschnitt des Gummistreifens
- V, v₁ bis v₄: Geschwindigkeit eines Kalanderrollenpaares

## Patentansprüche

1. Verfahren zum Aufspulen von Gummistreifen (6) aus einer Rohgummimischung auf einen Reifenrohling (7) mit folgenden Schritten:
- Erzeugen eines Gummistreifens (6) mit einem Extruder (1) mit einem Extrudermundstück (2),
- Weiterleitung des Gummistreifens (6)zu einem ersten Kalander-Rollenpaar (3)
- Reduzierung des Gummistreifen-Querschnittes (d) in einem mehrstufigen Streckprozess,
- wobei der Streckprozess mindestens zwei hintereinander angeordnete Kalander-Rollenpaare (3) umfasst,
- wobei die Rollenabstände der einzelnen Kalander-Rollenpaare (3), im Vergleich zum jeweils vorhergehenden Kalander-Rollenpaar, kleiner werden,
- Weiterleitung des Gummistreifens (6) an eine Streifenbelegerrolle (4),
- Aufspulen des Gummistreifens (6) auf einen auf einer Reifenaufbautrommel (5) aufgespannten Reifenrohling (7).

2. Verfahren nach Anspruch 1,
**dadurch gekennzeichnet, dass**
die Drehgeschwindigkeiten (V) der einzelnen Kalander-Rollenpaare (3), im Vergleich zum jeweils vorhergehenden Kalander-Rollenpaar, größer werden, wodurch der Gummistreifen (6) in seiner Längserstreckung unter Spannung steht und gestreckt wird.

3. Verfahren nach Anspruch 1 oder 2,
**dadurch gekennzeichnet, dass**
die Drehgeschwindigkeiten (V) der Streifenbelegerrolle (4) größer ist als die Drehgeschwindigkeit (V) des vorhergehenden Kalander-Rollenpaares.

4. Verfahren nach einem der Ansprüche 1 bis 3,
**dadurch gekennzeichnet, dass**
nur eine der beiden Rollen eines Kalander-Rollenpaares (3) über einen separaten Antrieb mit einer separaten Steuerung angetrieben wird.

5. Verfahren nach einem der Ansprüche 1 bis 4,
**dadurch gekennzeichnet, dass**
der Gummistreifen (6) beim Durchlaufen des ersten Kalander-Rollenpaares einen im Wesentlichen kreisrunden Querschnitt (8) aufweist.

6. Verfahren nach einem der Ansprüche 1 bis 5,
**dadurch gekennzeichnet, dass**
der Gummistreifen (6) beim Durchlaufen des letzten Kalander-Rollenpaares (3) einen im Wesentlichen linsenförmigen Querschnitt (9) erhält.

7. Verfahren nach einem der Ansprüche 1 bis 6,
**dadurch gekennzeichnet, dass**
der Gummistreifen (6) aus einer hochviskosen Gummimischung besteht.

8. Verfahren nach einem der Ansprüche 1 bis 7,
**dadurch gekennzeichnet, dass**
der Reifenrohling (7) eine Reifenkarkasse ist und der aufgespulte Gummistreifen (6) den Laufstreifen des Fahrzeugreifens bildet.

## Claims

1. Method of winding strips (6) of an unvulcanized rubber mixture onto a green tyre (7) comprising the following steps:
- producing a strip of rubber (6) by means of an extruder (1) with an outer die ring (2),
- passing the strip of rubber (6) on to a first pair of calender rolls (3)
- reducing the cross section (d) of the strip of rubber in multi-stage stretching process,
- wherein the stretching process comprises at least two pairs of calender rolls (3) arranged one behind the other,
- wherein the spacings between the rolls of the individual pairs of calender rolls (3) become smaller in comparison with the respectively preceding pair of calender rolls,
- passing the strip of rubber (6) on to a strip laying roll,
- winding the strip of rubber (6) onto a green tyre (7) mounted on a tyre building drum (5).

2. Method according to Claim 1, **characterized in that** the rotational speeds (V) of the individual pairs of calender rolls (3) become greater in comparison with the respectively preceding pair of calender rolls, whereby the strip of rubber (6) is under tension in its longitudinal extent and is stretched.

3. Method according to Claim 1 or 2, **characterized in that** the rotational speed (V) of the strip laying roll (4) is greater than the rotational speed (V) of the preceding pair of calender rolls.

4. Method according to one of Claims 1 to 3, **characterized in that** only one of the two rolls of a pair of calender rolls (3) is driven by means of a separate drive with a separate control.

5. Method according to one of Claims 1 to 4, **characterized in that** the strip of rubber (6) has a substantially circular cross section (8) as it runs through the first pair of calender rolls.

6. Method according to one of Claims 1 to 5, **characterized in that** the strip of rubber (6) is given a substantially lenticular cross section (9) as it runs through the last pair of calender rolls (3).

7. Method according to one of Claims 1 to 6, **characterized in that** the strip of rubber (6) consists of a highly viscous rubber mixture.

8. Method according to one of Claims 1 to 7, **characterized in that** the green tyre (7) is a tyre carcass and the wound strip of rubber (6) forms the tread rubber of the vehicle tyre.

## Revendications

1. Procédé de bobinage de rubans (6) de caoutchouc en un mélange de caoutchouc brut sur une ébauche (7) de bandage, lequel procédé présente les étapes qui consistent à :
- former un ruban (6) de caoutchouc à l'aide d'une extrudeuse (1) dotée d'une pièce (2) de sortie d'extrudeuse,
- conduire le ruban (6) de caoutchouc vers une première paire (3) de rouleaux de calandre,
- réduire la section transversale (d) du ruban de caoutchouc par une opération d'étirage en plusieurs étapes,
- l'opération d'étirage comprenant au moins deux paires (3) de rouleaux de calandre disposées l'une derrière l'autre,
- la distance entre les rouleaux de chacune des paires (3) de rouleaux de calandre étant plus petite que celle de la paire précédente de rouleaux de calandre,
- transférer le ruban de caoutchouc (6) vers un rouleau (4) de pose de ruban et
- enrouler le ruban (6) de caoutchouc sur une ébauche (7) de bandage serrée sur un tambour (5) de montage de bandage.

2. Procédé selon la revendication 1, **caractérisé en ce que** la vitesse de rotation (V) des différentes paires (3) de rouleaux de calandre augmente par rapport à celle de la paire précédente de rouleaux de calandre, ce qui amène le ruban (6) de caoutchouc à être mis sous tension et à être étiré dans le sens de sa longueur.

3. Procédé selon les revendications 1 ou 2, **caractérisé en ce que** la vitesse de rotation (V) du rouleau (4) de pose de ruban est supérieure à la vitesse de rotation (V) de la paire précédente de rouleaux de calandre.

4. Procédé selon l'une des revendications 1 à 3, **caractérisé en ce que** seul un des deux rouleaux d'une paire (3) de rouleaux de calandre est entraîné par un entraînement séparé doté d'une commande séparée.

5. Procédé selon l'une des revendications 1 à 4, **caractérisé en ce que** lorsqu'il traverse la première paire de rouleaux de calandre, le ruban (6) de caoutchouc présente une section transversale (8) essentiellement circulaire.

6. Procédé selon l'une des revendications 1 à 5, **caractérisé en ce que** lorsqu'il traverse la dernière paire (3) de rouleaux de calandre, le ruban (6) de caoutchouc a une section transversale (9) essentiellement en forme de lentille.

7. Procédé selon l'une des revendications 1 à 6, **caractérisé en ce que** le ruban (6) de caoutchouc est constitué d'un mélange de caoutchouc à haute viscosité.

8. Procédé selon l'une des revendications 1 à 7, **caractérisé en ce que** l'ébauche (7) de bandage est une carcasse de bandage et **en ce que** le ruban (6) de caoutchouc qui y est enroulé forme la bande de roulement du bandage de roue de véhicule.
